# EUROPÄISCHE PATENTSCHRIFT

(11) **EP 1 981 150 B1**
(45) Veröffentlichungstag und Bekanntmachung des Hinweises auf die Patenterteilung: **20.06.2012**
(21) Anmeldenummer: 08012318.5
(22) Anmeldetag: 11.01.2006
(51) Int. Cl.: H02K 3/50

(54) **Ständer einer elektrischen Großmaschine**
Stator for a large electric machine
Stator de machine électrique de puissance

(43) Veröffentlichungstag der Anmeldung: 15.10.2008
(62) Teilanmeldung aus: 06000535.2
(73) Patentinhaber: Siemens Aktiengesellschaft, 80333 München (DE)
(72) Erfinder: Beck, Ronald, Dr., 89522 Heidenheim (DE); Ehehalt, Ulrich, Dr., 45131 Essen (DE); Kowalski, Waldemar, 45472 Mühlheim an der Ruhr (DE); Lehmann, Christoph, Dr., 47506 Neukirchen-Vluyn (DE); Richter, Christoph, Dr., 49477 Ibbenbüren (DE); Spiess, Karlheinz, 47445 Moers (DE)

(56) Entgegenhaltungen:
- DE-A1- 10 352 315
- US-A- 3 151 260
- US-A- 3 924 149
- US-A- 5 729 073
- US-A- 5 798 595
- PATENT ABSTRACTS OF JAPAN Bd. 2000, Nr. 12, 3. Januar 2001 (2001-01-03) -& JP 2000 245096 A (MITSUBISHI ELECTRIC CORP), 8. September 2000 (2000-09-08)

## Beschreibung

Die Erfindung betrifft einen Ständer einer elektrischen Großmaschine nach dem Oberbegriff des Anspruchs 1. Im Innenbereich eines Wickelkopfs eines Ständers werden insbesondere innere und äußere Wicklungsstäbe über gekrümmte und/oder gekröpfte Verbindungsstege zu einer geschlossenen Wicklung verbunden. Hierbei sind die Verbindungsstege und die aus dem Blechpaket des Ständers herausragenden Teile der Wicklungsstäbe durch elektrisch isolierende Distanzstücke und Bandagen zu einem Verbundsystem zusammengefasst, um hohe mechanische Betriebsbelastungen aufnehmen zu können. Ein Wickelkopf ist während des Betriebs der elektrischen Maschinen durch elektromagnetische und mechanische Kräfte oftmals starken Schwingungen und Spannungen ausgesetzt, die die Bauteile des Wickelkopfs mechanisch übermäßig beanspruchen und eine Lösung des Wickelkopfverbands und unerwünschten Reibstaub verursachen können. Verformungen können auch bei elektromagnetischen Kräften entstehen, die bei abnormalen Kurzschluss- und Fehlerzuständen auftreten können.

In der US 5,729,073 wird ein Einstellsystem zur Regelung der Vibrationsschwingungen des Wickelkopfes eines Stators mit den Merkmalen des Oberbegriffs von Anspruch 1 offenbart.

Die DE 103 52 315 A1 offenbart ein Feder-/Dämpfungselement mit mehreren mechanischen Feder-/Dämpfungsteilelementen, die mittels zwischengeschalteter elektrorheologischer und/oder magnetorheologischer Einrichtungen koppelbar sind.

Ein Schwingungsregelungssystem für die Spule eines Stators wird auch in der US 5,798,595 offenbart.

Um die Schwingungen eines Winkelkopfes zu dämpfen, wird in der JP 2000245096 eine Stützstruktur vorgeschlagen.

In der US 3,151,260 wird ebenfalls eine Lösung zur Vermeidung von Schwingungen des Winkelkopfes vorgeschlagen.

Mit Winkelkopfschwingungsproblemen beschäftigt sich ebenfalls die US 3,924,149.

Es ist daher Aufgabe der Erfindung, einen gegen eine starke Beanspruchung stabilen Ständer einer elektrischen Großmaschine anzugeben.

Diese Aufgabe wird durch einen Ständer der Eingangs genannten Art gelöst, der ein in sich bewegliches Dämpfungsglied aufweisendes und am Wickelkopf angeordnetes Dämpfungsmittel zur Dämpfung von Schwingungen des Wickelkopfs mit Hilfe des Dämpfungsglieds aufweist. Schwingungen großer Amplitude, die zu einer Beschädigung des Wickelkopfs führen könnten, sowie eventuell weitere mechanische Beanspruchungen können abgedämpft und der Ständer kann vor großen mechanischen Beanspruchungen geschützt werden. Die Dämpfung wird hierbei insbesondere erreicht durch die Beweglichkeit des Dämpfungsglieds. Das Dämpfungsglied ist insbesondere beweglich zum Wickelkopf, wobei es zweckmäßigerweise vom Wickel kopf beabstandet ist, um eine Reibung mit diesem zu vermeiden. Unter einer elektrischen Großmaschine wird im vorliegenden Zusammenhang insbesondere ein Großgenerator, wie z.B. ein Turbogenerator mit einer elektrischen Leistung von 50 MVA und mehr verstanden, wobei speziell Bezug genommen wird auf gekühlte Turbogeneratoren mit Leistungen im Bereich ab 500 MVA.

Das Dämpfungsglied weist eine Flüssigkeit auf und ist als Flüssigkeit ausgeführt. Durch die Viskosität der Flüssigkeit, auf die Schwingungen des Wickelkopfs übertragen werden, kann Schwingungsenergie besonders effektiv in Wärme umgewandelt werden. Hierbei ist erfindungsgemäβß die Viskosität der Flüssigkeit einstellbar, wodurch ein Dämpfungsgrad der Schwingungen einstellbar ist. Zweckmäßigerweise ist eine physikalische Eigenschaft der Flüssigkeit durch das Anlegen eines elektrischen und/oder magnetischen Felds an die Flüssigkeit einstellbar, wodurch das Dämpfungsverhalten der Flüssigkeit gezielt, einfach und schnell in gewünschter Weise beeinflusst werden kann. Vorteilhafterweise umfasst der Ständer oder die elektrische Großmaschine hierfür eine Steuereinheit, die das Anlegen des elektrischen und/oder magnetischen Felds steuert.

Eine physikalische Eigenschaft der Flüssigkeit ist besonders einfach einstellbar, wenn die Flüssigkeit eine elektrorheologische oder magnetorheologische Flüssigkeit ist. Eine magnetorheologische Flüssigkeit besteht aus einer Suspension mit magnetischen Teilchen in der Größenordnung von 10 nm bis 1000 nm. Die Flüssigkeit verfestigt sich in einem Magnetfeld, wobei die Teilchen Ketten bilden. Das erhöht die Viskosität bzw. Zähigkeit der Flüssigkeit und kann sie sogar verfestigen, wenn eine einwirkende Druckkraft nicht groß genug ist um die Ketten zu brechen. Elektrorheologische Flüssigkeiten zeichnen sich dadurch aus, dass ihre Viskosität durch ein äußeres elektrisches Feld im Bereich mehrerer Größenordnungen gezielt beeinflusst werden kann. Unter Einfluss eines äußeren elektrischen Felds erfolgt eine Polarisierung der suspendierten Teilchen mit dem Resultat, dass diese sich entsprechend dem induzierten Dipolmoment innerhalb der Flüssigkeit entlang der Feldlinien ausrichten und zu mechanisch belastbaren Ketten agglomerieren. Für hinreichend große Feldstärken von üblicherweise einigen kV/mm erhöht sich die Viskosität der Flüssigkeit innerhalb weniger Millisekunden soweit, dass sie zu einem elastischen Körper erstarrt und erst oberhalb einer bestimmten mechanischen Belastungsgrenze, der so genannten Fließgrenze, wieder zu fließen beginnt.

Vorteilhafterweise weist das Dämpfungsmittel einen Hohlkörper auf, der am Wickelkopf angeordnet ist und der mit der Flüssigkeit gefüllt ist. Schwingungsenergie kann besonders effektiv vom Wickelkopf auf die Flüssigkeit übertragen werden, insbesondere wenn der Hohlkörper eine Außen- oder eine Innenschale ist.

In einer vorteilhaften Ausgestaltung der Erfindung ist das Dämpfungsglied ein am Wickelkopf angeordnetes Energiedissipationselement zur Aufnahme von Schwingungsenergie aus dem Wickelkopf und Umwandlung in Wärme. Die Schwingungsenergie kann direkt vor Ort umgewandelt und muss nicht abgeführt werden. Als Energiedissipationselement wird jedes Element verstanden, das zur Umwandlung von Schwingungsenergie in Wärme vorgesehen ist.

Schwingungen innerhalb des Wickelkopfs können besonders effektiv gedämpft werden, wenn das Dämpfungsglied zwischen einem Oberstab und einem Unterstab des Wickelkopfs angeordnet ist.

Eine insbesondere gegen ein Verschieben oder Verrutschen sichere Anordnung des Dämpfungsglieds kann erreicht werden, wenn das Dämpfungsglied in ein Abstützelement integriert ist. Das Abstützelement kann ein Befestigungswinkel, eine Konsole, ein Befestigungskonus o. ä. ein.

In einer weiteren Ausführungsvariante der Erfindung umfasst der Ständer eine Steuereinheit, die zur Einstellung einer Steifigkeit des Dämpfungsmittels vorgesehen ist. Hierdurch kann eine Dämpfung des Wickelkopfs gezielt an momentane Verhältnisse angepasst und kritische Betriebsbereiche können gezielt gesichert werden. Die Steuereinheit kann, muss jedoch nicht Bestandteil des Ständers sein, sondern kann der elektrischen Großmaschine als Ganzes zugeordnet sein. Die Steifigkeit kann durch eine Beeinflussung der Flüssigkeit und/oder durch ein Verspannen des Dämpfungsmittels vorgenommen werden. Vorteilhafterweise erfolgt die Einstellung in Abhängigkeit von einem Schwingungsverhalten des Wickelkopfs, insbesondere eines momentan gemessenen Schwingungsverhaltens des Wickelkopfs. Eine Dämpfung kann einfach und gezielt an ein momentanes Dämpfungsbedürfnis angepasst werden. Das Schwingungsverhalten kann gemessen und die Einstellung in Form einer Regelung erfolgen. Es ist auch möglich, das Schwingungsverhalten theoretisch zu ermitteln, beispielsweise anhand von Betriebsgrößen des Ständers. Insbesondere ist die Steuereinheit dazu vorgesehen, eine Steifigkeit des Dämpfungsmittels gezielt an einzelne, mehrere oder eine Sequenz von Schwingungsbergen und/oder Schwingungstälern anzupassen.

Die Erfindung wird anhand von Ausführungsbeispielen näher erläutert, die in den Zeichnungen dargestellt sind.

Es zeigen:
- FIG 1: einen Turbogenerator in einer schematischen Dar- stellung,
- FIG 2: einen nicht zur Erfindung gehörenden Ständerwickelkopf des Turbogenerators aus FIG 1 mit einem Dämpfungsmittel,
- FIG 3: einen Ständerwickelkopf mit einem Dämpfungsmittel nach der Erfindung,
- FIG 4: einen weiteren nicht zur Erfindung gehörenden Ständerwickelkopf mit einem zwei dehnbare Innenringe umfassenden Dämpfungsmittel und
- FIG 5: einen der dehnbaren Innenringe aus FIG 4 in einer Draufsicht.

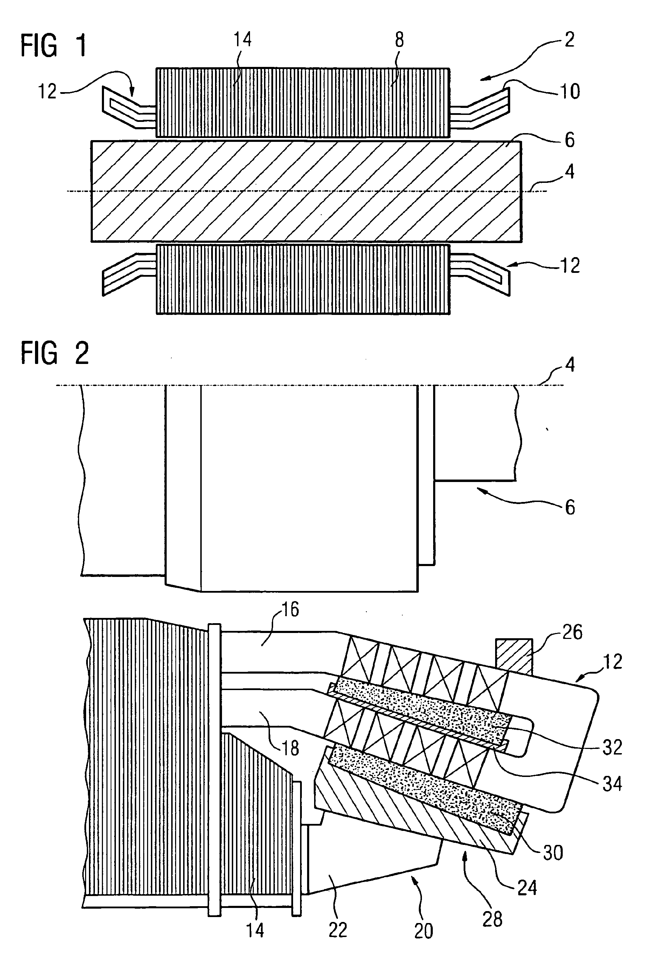

FIG 1 zeigt eine elektrische Großmaschine 2 in Form eines Turbogenerators mit einem um eine Rotationsachse 4 drehbaren Läufer 6 und einem um den Läufer 6 angeordneten Ständer 8. Der Ständer 8 umfasst eine elektrische Wicklung 10, welche parallel zur Rotationsachse 4 gestreckt ist und zum großen Teil innerhalb eines ebenfalls parallel zur Rotationsachse 4 angeordneten Blechpakets 14 des Ständers 8 angeordnet ist. Aus diesem Blechpaket 14 ragt beidseitig jeweils ein Wickel kopf 12 heraus, der im Wesentlichen rotationssymmetrisch um die Rotationsachse 4 gebildet ist. Zum Zwecke der Kühlung ist die Wicklung 10 von einem Kühlmittel, beispielsweise Wasser oder Wasserstoff umströmbar.

FIG 2 zeigt einen Ausschnitt des rechten Wickelkopfs 12 aus FIG 1. In den Wickelkopf 12 ragen die Enden eines Oberstabs 16 und eines Unterstabs 18, die aus dem Blechpaket 14 herausragen und im Wickelkopf 12 miteinander verbunden sind. Der Wickelkopf 12 wird abgestützt von einer Trägerstruktur 20, die eine Reihe als Winkel ausgeführte Konsolen 22 umfasst, die wiederum ein als Konus ausgeführtes massives Abstützelement 24 tragen. Die Konsolen 22 sind ihrerseits am Blechpaket 14 befestigt. Nach innen stabilisiert wird der Wickelkopf 12 durch einen Ring 26.

Um den Wickelkopf 12 herum ist ein Dämpfungsmittel 28 mit einem in das Abstützelement 24 eingebetteten und zwischen dem Abstützelement 24 und dem Unterstab 18 angeordneten Dämpfungsglied 30. Das Dämpfungsglied 30 ist als Schale ringförmig konisch um den Wickelkopf 12 herum geführt und umfasst eine Schüttung, die das Abstützelement 24 vom Unterstab 18 beabstandet. Zwischen dem Oberstab 16 und dem Unterstab 18 befindet sich ein weiteres Dämpfungsglied 32, das ebenfalls ringförmig konisch ausgeführt ist und den Oberstab 16 vom Unterstab 18 beabstandet. Das Dämpfungsglied 32 wird von einem Haltemittel 34 in seiner Position zwischen dem Oberstab 16 und dem Unterstab 18 gehalten. Die beiden Dämpfungsglieder 30, 32, die neben ihrer dämpfenden Funktion auch eine isolierende Funktion haben, umfassen jeweils eine Schüttung von Sand, die jeweils von einem elastischen Gefäß gehalten ist, das beispielsweise in Form eines Schlauchs gebildet sein kann.

Bei einem Betrieb der elektrischen Großmaschine 2 ist der Wickelkopf 12 Schwingungen ausgesetzt, die ihn in Radialrichtung bewegen. Bei einer solchen Bewegung werden der Oberstab 16 und der Unterstab 18 in die Sandschüttungen eingedrückt, so dass der Sand innerhalb der Schüttungen gegeneinander bewegt wird und Bewegungsenergie des Oberstabs 16 und des Unterstabs 18 in Wärme umgewandelt wird. Der Sand ist in seiner Größe, Dichte und seinem Gewicht an das Schwingungsverhalten des Wickelkopfs 12 angepasst, so dass das Schwingungsverhalten so weit wie möglich optimiert ist. Je nach Sand ist die Schüttung härter oder weicher einstellbar.

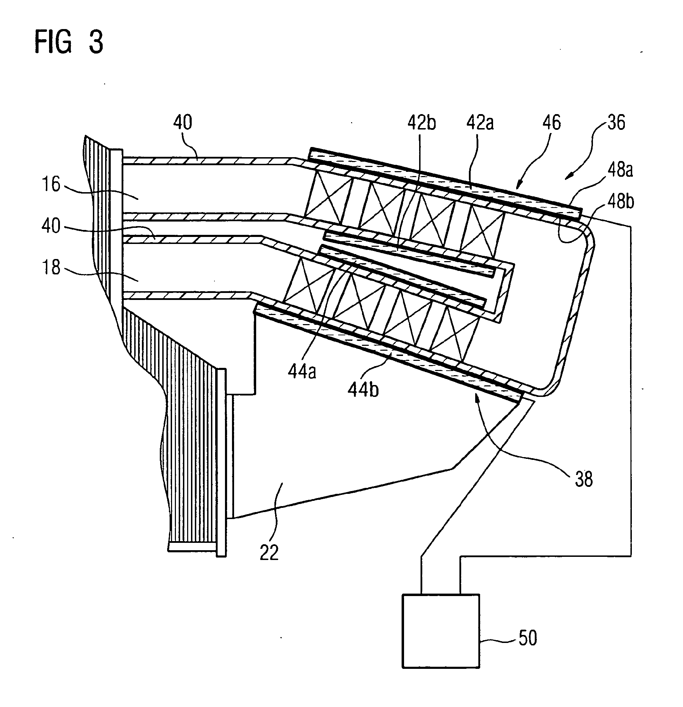

FIG 3 zeigt einen erfindungsgemäβßen Wickelkopf 36 einer elektrischen Großmaschine. Bezüglich gleichbleibender Bauteile kann auf die Beschreibung zu den in den FIG 1 und 2 gezeigten Ausführungsbeispielen verwiesen werden. Im Folgenden werden lediglich die Unterschiede zu dem Ausführungsbeispiel aus den FIG 1 und 2 beschrieben, wobei gleiche Bauteile grundsätzlich mit den gleichen Bezugszeichen versehen sind. Am Wickelkopf 36 ist ein Dämpfungsmittel 38 angeordnet, das eine zusätzliche Isolation 40 auf dem Oberstab 16 und Unterstab 18 aufweist, die die beiden Stäbe jeweils von Dämpfungsgliedern 42a,b und 44a,b trennt. Jedes dieser Dämpfungsglieder 42a,b, 44a,b weist einen flach ausgeführten Behälter 46 auf, der mit einer elektrorheologischen Flüssigkeit gefüllt ist. Jeder dieser Behälter 46 umfasst zwei Steuerschichten 48a,b, durch die mit Hilfe einer Steuereinheit 50 Spannung an die elektrorheologische Flüssigkeit gelegt werden kann. Je nach angelegter Spannung variiert die Viskosität der Flüssigkeit und somit die Steifigkeit des Dämpfungsmittels 38 und Dämpfungswirkung der Flüssigkeit auf den Wickelkopf 36.

Die Steuereinheit 50 ist so vorbereitet, dass sie die Schwingungen des Wickelkopfs 36 mit an dem Oberstab 16 und dem Unterstab 18 angeordneten Sensoren misst und die Spannung zwischen den Steuerschichten 48a,b so variiert, dass der Wickelkopf 36 in seinem Schwingungsverhalten möglichst optimiert ist. Hierbei werden die Steuerschichten 48a,b mit einer auftretenden Schwingungsfrequenz, beispielsweise 100 Hz angesteuert, so dass die Flüssigkeit beispielsweise gezielt Schwingungsberge einer Schwingung mit 100 Hz abdämpft.

In einer ähnlichen Alternative kann an Stelle der elektrorheologischen Flüssigkeit eine magnetorheologische Flüssigkeit verwendet werden, deren Viskosität von einem die Flüssigkeit durchfließenden magnetischen Fluss abhängig ist. Hierbei kann in einer weiteren Alternative auf die Steuereinheit 50 verzichtet werden, da der magnetische Fluss durch einen durch den Wickelkopfs 36 fließenden Strom erzeugt wird.

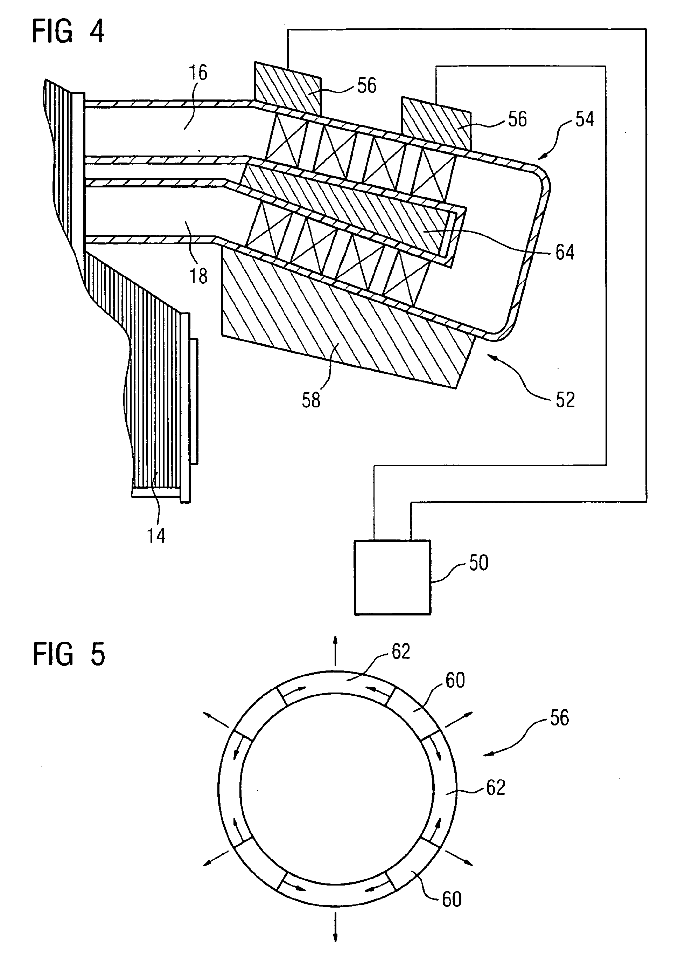

FIG 4 zeigt einen weiteren nicht zur Erfindung gehörenden Wickelkopf 52 mit einem Dämpfungsmittel 54, das zwei Innenringe 56 aufweist. Einer dieser Innenringe 56 ist in FIG 5 in einer Draufsicht dargestellt. Um den Wickelkopf 52 herum geführt ist eine freihängende Trägerstruktur 58 in Form eines konischen Rings, der relativ zum Blechpaket 14 beweglich angeordnet ist und der den Wickelkopf 52 fest umklammert. Jeder der Innenringe 56 weist vier Dämpfungsglieder 60 zwischen zwei steifen Gliedern 62 auf. Es sind alternativ eine andere Anzahl von Dämpfungsgliedern 60 denkbar, beispielsweise eines, zwei oder drei oder mehr als vier. Die Dämpfungsglieder 60 sind als dehnbare Elemente ausgeführt, die mit Luft, Gas oder einer Flüssigkeit gefüllt und mit einem Ventil versehen sind. Diese Ventile können von der Steuereinheit 50 derart angesteuert werden, dass der Innendruck der Dämpfungsglieder 60 verringert oder mit Hilfe einer entsprechenden Druckvorrichtung vergrößert werden kann. Bei einer Druckvergrößerung dehnen sich die Dämpfungsglieder 60 aus, so dass sich hierdurch der gesamte Innenring 56 ausdehnt und sein Außendurchmesser vergrößert wird, wie durch die Pfeile in FIG 5 angedeutet ist. Hierdurch wird der Innenring 56 auf den Oberstab 16 gepresst. Der Druck wird über ein Zwischenelement 64 auf die Trägerstruktur 58 übertragen und der Wickelkopf 52 wird zwischen einem bzw. beiden Innenringen 56 und der Trägerstruktur 58 fest verspannt.

Durch die Einstellung der Steifigkeit des Dämpfungsmittels 54 durch die Einstellung des Drucks der Dämpfungsglieder 60 und damit die Einstellung der Verspannung des Wickelkopfs 52 können die Eigenschwingungen des Wickelkopfs 52 gezielt beeinflusst werden, beispielsweise indem die Eigenschwingungen bei wachsendem Druck der Innenringe 56 in ihrer Frequenz ansteigen. Auf diese Weise können mit Hilfe der Steuereinheit 50 die Eigenschwingungen des Wickelkopfs 52 so gesteuert werden, dass sie außerhalb der Anregungsfrequenzen der elektrischen Großmaschine liegen und die Übertragung der Schwingungen auf den Wickelkopf 52 gering gehalten werden kann.

In einer einfacheren Version kann auf eine Steuereinheit 50 verzichtet werden und ein Innenring 56 mit einem vorbestimmten Druck an den Wickelkopf 52 versehen werden. Die Dämpfungsglieder 60 ermöglichen hierbei ein Nachspannen des Innenrings 56, wodurch einem alterungsbedingten Lösen der Spannung des Innenring 56 entgegengewirkt werden kann.

## Patentansprüche

1. Ständer (8) einer elektrischen Großmaschine (2) mit einem Wickelkopf (12, 36, 52),
wobei ein in sich bewegliches Dämpfungsglied (30, 32, 42a,b, 44a,b, 60) aufweisendes und am Wickelkopf (12, 36, 52) angeordnetes Dämpfungsmittel (28, 40, 54) zur Dämpfung von Schwingungen des Wickelkopfs (12, 36, 52) mit Hilfe des Dämpfungsglieds (30, 32, 42a,b, 44a,b, 60) vorgesehen ist,
wobei das Dämpfungsglied (42a,b, 44a,b) eine Flüssigkeit aufweist,
**dadurch gekennzeichnet, dass**
die Viskosität der Flüssigkeit einstellbar ist.

2. Ständer (8) nach Anspruch 1,
**dadurch gekennzeichnet, dass**
eine physikalische Eigenschaft der Flüssigkeit durch das Anlagen eines magnetischen und/oder elektrischen Felds an die Flüssigkeit einstellbar ist.

3. Ständer (8) nach Anspruch 1 oder 2,
**dadurch gekennzeichnet, dass**
das Dämpfungsmittel (40) einen Hohlkörper aufweist, der am Wickelkopf (36) angeordnet ist und der mit der Flüssigkeit gefüllt ist.

4. Ständer (8) nach einem der vorhergehenden Ansprüche,
**gekennzeichnet durch**
eine Steuereinheit (50), die zur Einstellung einer Steifigkeit des Dämpfungsmittels (40, 54) vorgesehen ist.

5. Ständer (8) nach Anspruch 4,
**dadurch gekennzeichnet, dass**
die Einstellung in Abhängigkeit von einem Schwingungsverhalten des Wickelkopfs (36, 52) erfolgt.

## Claims

1. Stator (8) for a large electrical machine (2) having an end winding (12, 36, 52),
wherein a damping means (28, 40, 54), which is arranged on the end winding (12, 36, 52) and has a moving damping element (30, 32, 42a,b, 44a,b, 60), is provided for damping of oscillations of the end winding (12, 36, 52) with the aid of the damping element (30, 32, 42a,b, 44a,b, 60),
wherein the damping element (42a,b, 44a,b) has a liquid, **characterized in that**
the viscosity of the liquid is variable.

2. Stator (8) according to Claim 1,
**characterized in that**
a physical characteristic of the liquid can be varied by application of a magnetic and/or electrical field to the liquid.

3. Stator (8) according to Claim 1 or 2,
**characterized in that**
the damping means (40) has a hollow body which is arranged on the end winding (36) and is filled with the liquid.

4. Stator (8) according to one of the preceding claims, **characterized by** a control unit (50) which is provided for variation of a stiffness of the damping means (40, 54).

5. Stator (8) according to Claim 4,
**characterized in that**
the variation is carried out as a function of an oscillation behaviour of the end winding (36, 52).

## Revendications

1. Stator ( 8 ) d'une machine ( 2 ) électrique de puissance comprenant une tête ( 12, 36, 52) de bobine,
dans lequel il est prévu un moyen ( 28, 40, 54 ) d'amortissement, qui a un élément ( 30, 32, 42a,b, 44a,b, 60 ) d'amortissement mobile en soi, qui est monté sur la tête ( 12, 36, 52 ) de bobine et qui est destiné à amortir des vibrations de la tête ( 2, 36, 52 ) de bobine à l'aide de l'élément ( 30, 32, 42a,b, 44a,b, 60 ) d'amortissement,
dans lequel l'élément ( 42a,b, 44a,b, ) d'amortissement comporte un liquide
**caractérisé en ce que**
la viscosité du liquide est réglable.

2. Stator ( 8 ) suivant la revendication 1,
**caractérisé en ce que**
une propriété physique du liquide peut être réglée par l'application d'un champ magnétique et/ou électrique au liquide.

3. Stator ( 8 ) suivant la revendication 1 ou 2,
**caractérisé en ce que** le moyen ( 40 ) d'amortissement comporte un corps creux qui est disposé sur la tête ( 36 ) de bobine et qui est empli du liquide.

4. Stator ( 8 ) suivant l'une des revendications précédentes,
**caractérisé**
**par** une unité ( 50 ) de commande, qui est prévue pour le réglage d'une raideur du moyen ( 40, 54 ) d'amortissement.

5. Stator ( 8 ) suivant la revendication 4,
**caractérisé en ce que**
le réglage s'effectue en fonction du comportement à la vibration de la tête ( 36, 52 ) de bobine.
